Europäisches Patentamt

European Patent Office

Office européen des brevets

(11) Publication number: 0 274 173
A1

# EUROPEAN PATENT APPLICATION

(21) Application number: 87300181.2

(22) Date of filing: 09.01.87

(51) Int. Cl.⁴: **H01B 7/30** , H01B 7/08 , H02K 3/14 , H02K 3/04

(43) Date of publication of application:
13.07.88 Bulletin 88/28

(84) Designated Contracting States:
AT BE CH DE ES FR GB GR IT LI LU NL SE

(71) Applicant: **Phelps Dodge Industries, Inc.**
**300 Park Avenue**
**New York New York(US)**

(72) Inventor: **Kauffman, John Clyde**
**1212 Sunset Drive**
**Fort Wayne Indiana(US)**
Inventor: **Coon, Jessie Harris**
**3626 Bramblecrest Drive**
**Fort Wayne Indiana(US)**
Inventor: **Westenfeld, Richard Alan**
**5430 Stony Run**
**Fort Wayne Indiana(US)**

(74) Representative: **Adkins, Michael et al**
**Withers & Rogers 4 Dyer's Buildings**
**Holborn London, EC1N 2JT(GB)**

(54) Ribbon cable, transposed ribbon cable, and method and apparatus for making the same and electromagnetic device.

(57) An improved ribbon cable (410) comprising a plurality of insulated wires (101) in a fixed relationship to each other. The conductors (101) have axes in a common plane, and extend the full length of the cable. The conductors may be bonded to a ribbon of flexible insulation material in a spaced apart relation with the longitudinal axes of the ribbon material and the conductors generally parallel to each other. The conductors (101) may be juxtaposed in a fixed relationship. The improved transposed cable (410) has the conductors (101) of the cable in the form of a continuous helix. The method and apparatus for manufacturing both the ribbon cable (410) and the transposed cable (410) by folding the ribbon cable angularly with respect to the longitudinal axis repeatedly while advancing the ribbon cable (410) incrementally.

EP 0 274 173 A1

# RIBBON CABLE, TRANSPOSED RIBBON CABLE AND METHOD AND APPARATUS FOR MAKING THE SAME AND AN ELECTROMAGNETIC DEVICE

## BACKGROUND OF THE INVENTION

The present invention relates to electrical cable and particularly to ribbon cables in which an insulated conductor or conductors, positioned in a fixed relationship to each other, extend the full length of the cable, and to transposed ribbon cables in which conductors are in the shape of juxtaposed laterally flattened helicies, and to methods and apparatus for manufacturing the ribbon cable and transposed ribbon cable, and to electromagnetic devices having said cables as their magnet windings.

Electrical cables in a variety of configurations have been available for an extended priod of time. One of those varieties is ribbon cable. A ribbon cable has a roughly rectangular cross section as opposed to the round cross section of ordinary cables. The rectangular cross section permits use of the ribbon cable in uses where one or two dimensions are constrained.

Ribbon cables also provide improved field or armature and stator windings in a number of electromagnetic devices such as motors, generators and transformers. Ribbon cables in many applications provide for increased ease of assembly and improved efficiency. In some electromagnetic devices, eddy current losses can be reduced drastically by use of transposed ribbon cable. In other electromagnetic devices eddy current losses can be balanced against other losses to produce an electromagnetic device having a greatly improved efficiency.

In transformer design greater energy efficiency is achieved by using ribbon cable. Load losses can be reduced by using the transposed ribbon cable of the invention. Similar benefits and similar energy efficiencies can be achieved in rotating electromagnetic device design using ribbon cable and the transposed ribbon cable of the invention.

Further, ribbon cables heretofore have been limited as to the number of conductors in the cable. This limitation is the result of conventional methods and apparatus for manufacturing the cable. No such limitation exhists for the methods and apparatus of the invention.

It is therefore highly desirable to provide improved ribbon cables, improved transposed ribbon cables, improved methods and improved apparatus for producing such cables, improved electromagnetic devices and improved electromagnetic windings, improved ribbon cables and improved transposed ribbon cables with improved dimensional characteristics, improved ribbon cables and improved transposed ribbon cables which can be manufactured at lower cost and at faster production speeds, improved transposed ribbon cables in which conductors are juxtaposed in fixed relation to each other at an angle to the longest dimension of the cable, improved transposed ribbon cables in which the conductor or conductors define one or more juxtaposed laterally flattened helicies, improved transposed ribbon cables in which the number of conductors is not limited, improved methods and improved apparatus for producing ribbon cables and transposed ribbon cables having the above-desired features, improved methods and improved apparatus for manufacturing transposed ribbon cables from ribbon cables by folding the same repeatedly while advancing the ribbon cable incrementally, improved electromagnetic windings having reduced eddy current losses and/or improved overall energy efficiencies, improved electromagnetic device which have ribbon cable of the invention with one or more of the above-desired features as magnetic windings, and improved ribbon cables, transposed ribbon cables, apparatus and methods for producing such cables and electromagnetic devices and electromagnetic windings meeting all of the above-desired features.

## SUMMARY OF THE INVENTION

It is an object of this invention to provide improved ribbon cables and improved transposed ribbon cables and improved methods and improved apparatus for producing such cables and improved electromagnetic devices and improved electromagnetic windings.

Another object of this invention is to provide improved ribbon cables and improved transposed ribbon cables which have improved dimensional characteristics.

Another object of the invention is to provide improved ribbon cables and improved transposed ribbon cables which can be manufactured at lower cost and at faster production speeds.

Another object of this invention is to provide improved transposed ribbon cables in which conductors are in fixed relation to each other at an angle to the longitudinal dimension of the cable.

Another object of this invention is to provide improved transposed ribbon cables in which the conductor or conductors define one or more juxtaposed laterally flattened helices.

Another object of this invention is to provide improved transposed ribbon cables in which there is no limitation as to the number of conductors in the cable.

Another object of the invention is to provide improved methods and improved apparatus for producing ribbon cables and transposed ribbon cables having all of the above desired features.

A another object of this invention is to provide improved methods and apparatus for manufacturing transposed ribbon cables from ribbon cable by folding the same repeatedly while advancing the ribbon cable incrementally.

Another object of this invention is to provide improved electromagnetic windings having reduced eddy current losses and/or improved overall energy efficiencies.

Another object of this invention to provide an improved electromagnetic device which has the ribbon cabe of the invention with one or more of the above-desired features as its magnetic windings.

It is finally an object of this invention to provide improved ribbon cables, transposed ribbon cables, apparatus and methods of producing such cables and electromagnetic devices and windings meeting all of the above-desired features.

In the broader aspects of the invention there is provided an improved ribbon cable comprising a plurality of insulated wires in a fixed relationship to each other. The conductors have axes in a common plane, and extend the full length of the cable. The conductors may be bonded to a ribbon of flexible insulation material in a spaced apart relation with the longitudinal axes of the ribbon material and the conductors generally parallel to each other. The conductors may be juxtaposed in a fixed relationship. The improved transposed cable has the conductors of the cable in the form of a continuous helix. The method and apparatus for manufacturing both the ribbon cable and the transposed cable by folding the ribbon cable angularly with respect to the longitudinal axis repeatedly while advancing the ribbon cable incrementally.


BRIEF DESCRIPTION OF THE DRAWINGS

The above-mentioned and other features and objects of this invention and the manner of obtaining them will become more apparent and the invention itself will be better understood by reference to the following description of a specific embodiment of the invention taken in conjunction with the accompanying drawing wherein:

Figure 1 is a top plan view of ribbon cable of the invention;

Figure 2 is a a diagrammatic cross-sectional view of the ribbon cable of the invention shown in Figure 1;

Figure 3 is a diagrammatical cross-sectional view like Figure 2 of another ribbon cable of the invention;

Figure 4 is a top plan view of a transposed ribbon of the invention, manufactured from the ribbon cable illustrated in Figures 1 and 2;

Figure 5 is a diagrammatical cross-sectional view of another ribbon cable of the invention;

Figure 6 is a perspective view of different ribbon cable of the invention;

Figure 6A is a partial end view of a ribbon cable of the invention illustrated by Figure 6;

Figure 6B is a partial end view of another ribbon cable of the invention illustrated by Figure 6;

Figure 7 is a perspective view of different transposed ribbon cable of the invention manufactured from ribbon cable of Figure 6;

Figure 7A is a partial end view of a transposed ribbon cable of the invention illustrated by Figure 7 manufactured from ribbon cable of Figures 6 and 6A.

Figure 7B is a partial end view of another transposed ribbon cable of the invention illustrated by Figure 7, manufactured from ribbon cable of Figures 6 and 6B;

Figure 8 is a top plan view of the transposed ribbon cable of Figure 7 in which a single conductor is emphasized for clarity;

Figure 9 is a schematic diagram of a portion of apparatus of the invention for the production of cables of Figures 6, 6A, 6B, 7, 7A, 7B and 8;

Figure 10 is a schematic diagram of the remaining portion of apparatus of the invention for production of cables of Figures 6, 6A, 6B, 7, 7A, 7B and 8;

Figure 11 is a schematic diagram of part of the apparatus of Figure 10;

Figure 12 is a perspective view of an armature having ribbon cable of the invention as its magnetic windings; and

Figure 13 is a perspective view of a stator having ribbon cable of the invention as its magnetic windings;

Figure 14 is a perspective view of another ribbon cable of the invention;

Figure 15 is a perspective view of another ribbon cable of the invention;

Figure 16 is a perspective view of another transposed ribbon cable of the invention manufactured from ribbon cable of Figure 15,;

Figure 17 is a schematic diagram of an alternative apparatus of the invention for the production of transposed ribbon cables;

Figure 18 is a schematic perspective view of an alternative folder, a portion of the apparatus of the invention illustrated in Figure 9 and 17.

## DESCRIPTION OF THE SPECIFIC EMBODIMENT

The invention discloses improved ribbon cables (generally designated hereinafter by the numeral 100) having one or more conductors (generally designated hereinafter by the numeral 101) and insulation (generally designated hereinafter by the number 103) superimposed on conductors 101, and also discloses improved transposed ribbon cables (generally designated hereinafter by the numeral 400) made from the ribbon cables.

Ribbon cable 100 of the invention has a generally or roughly rectangular cross-section with an upper surface 102, a lower surface 104 and two edges 105. Upper surface 102 and the lower surface 104 are generally parallel and roughly planar to each other with deviations from that shape generally due to the cross-sectional shape and positioning of conductors 101.

In specific embodiments, conductors 101 may be copper or aluminum and/or may be conductive foil, conductive strips of conductive paint or other depositions of metal or conductive material. In specific embodiments, the conductors 101 are magnet wire conductors having the dimensional characteristics set forth in ANSI/NEMA MW1000-1977 Standards. The embodiments illustrated in the drawings are not necessarily drawn to scale because of the relatively small dimensions that are involved.

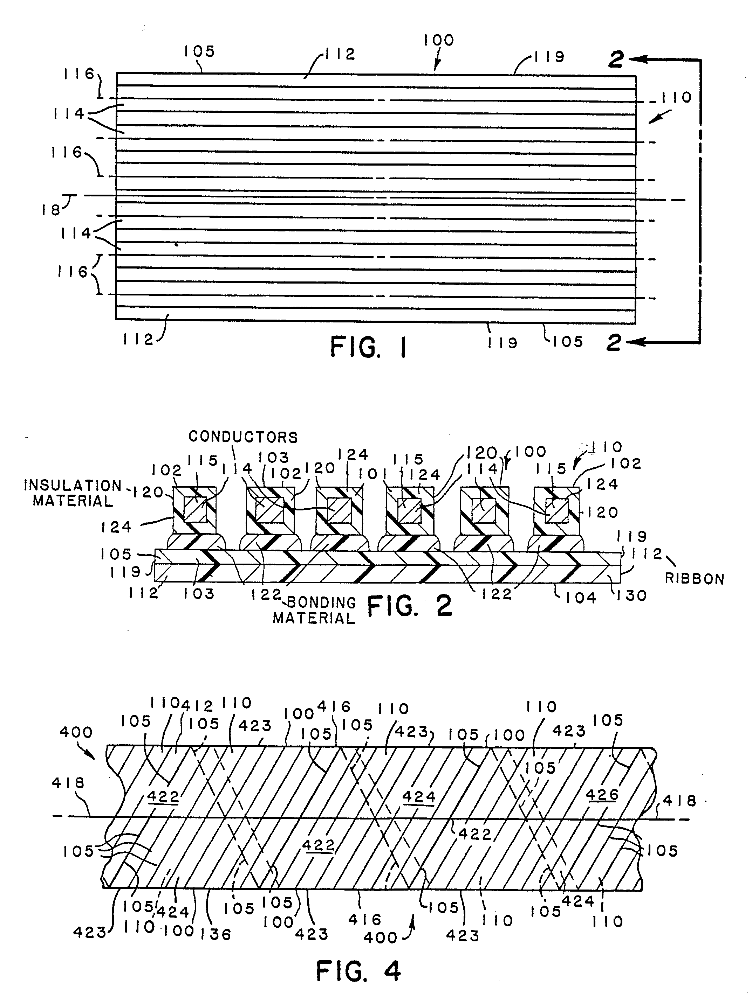

Referring to Figures 1, 2, 3 and 5, an improved ribbon cable 110 of the invention is shown to comprise an elongated sheet or ribbon 112 of flexible insulation material and a plurality of elongated conductors 114 bonded to ribbon 112. Each of the conductors 114 has a longitudinally extending axis 116. The ribbon 112 has a longitudinally extending axis 118 and longitudinally extending boundaries 119. Axes 116 and 118 are parallel to each other. One or two coats of bonding material 130 may be connected to, but insulated from, conductors 114 and/or ribbon 112.

With particular reference to Figure 2, conductors 114 are insulated conductors 124. Each insulated 124 conductor has a bare conductor 115 and a continuous and concentric coat 120 of flexible insulation material superimposed on the bare conductor 115. Insulated conductors 124 are bonded to ribbon 112 by a continuous and uniformly thick layer of bonding material 122 positioned between each insulated conductor 124 and the ribbon 112. In the embodiment shown, the conductor to conductor insulation is provided by the ribbon 112, the superimposed coat 120 of insulation material, and by the spacing of the insulated conductors 124.

In other specific embodiments, more or less reliance may be placed on the spacing of the insulated conductors 124 and the superimposed coat 120 of insulation material for the conductor to conductor insulation. In other words, the coat 120 can be provided in a variety of thickness or it can be eliminated, and the spacing between insulated conductors 124 can be varied as desired for particular uses. Additionally, bonding material 122, in a specific embodiment, can be the same material as the insulation material of coat 120. A uniform coat of bonding material 130 is superimposed of ribbon 112.

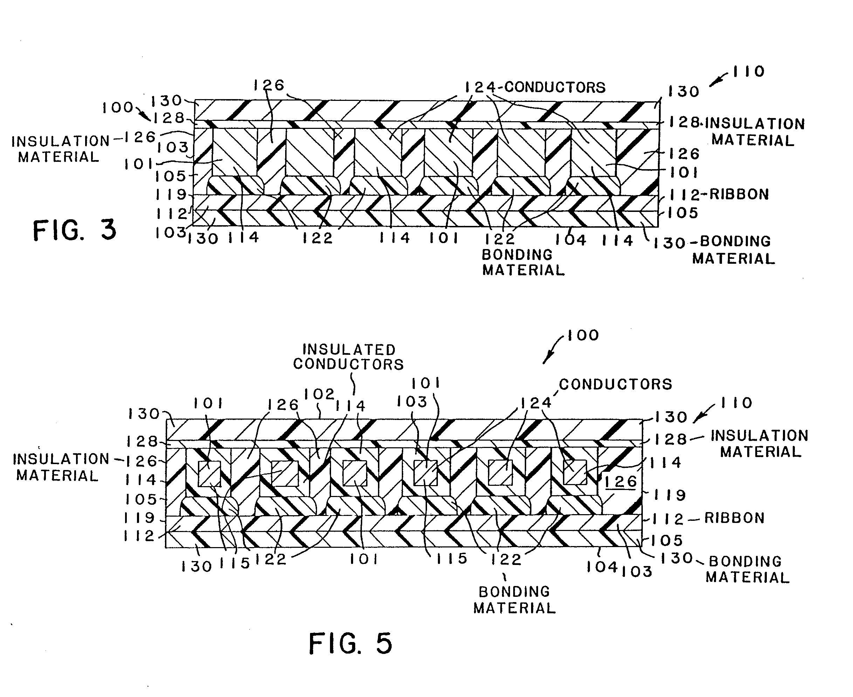

Ribbon cable 110 of Figure 3 is shown to have ribbon 112 on which a plurality of conductors 114 are positioned in a spaced apart relationship. Ribbon 112 is elongated and conductors 114 extend the entire length of ribbon 112. Conductors 114 and ribbon 112 each have a longitudinal axis and those axes 116, 118 are generally parallel to each other.

Conductors 114 may be any of the conductors 101 above-described, with or without a coat 120 of insulation material. If conductors 114 are bare and the ribbon cable 110 of the invention is such as shown in Figure 2, the conductor to conductor insulation must be provided by the spacing of the conductors. In the embodiment of the ribbon cable 110 shown in Figure 3, additional insulation material 126 is positioned between conductors 114. A uniformly thick and continuous coat 128 of insulation material may be positioned on top of the conductors 114 and insulation 126. A uniform coat of bonding material 130 may be superimposed on ribbon 112 or on insulation coat 128, or both.

4

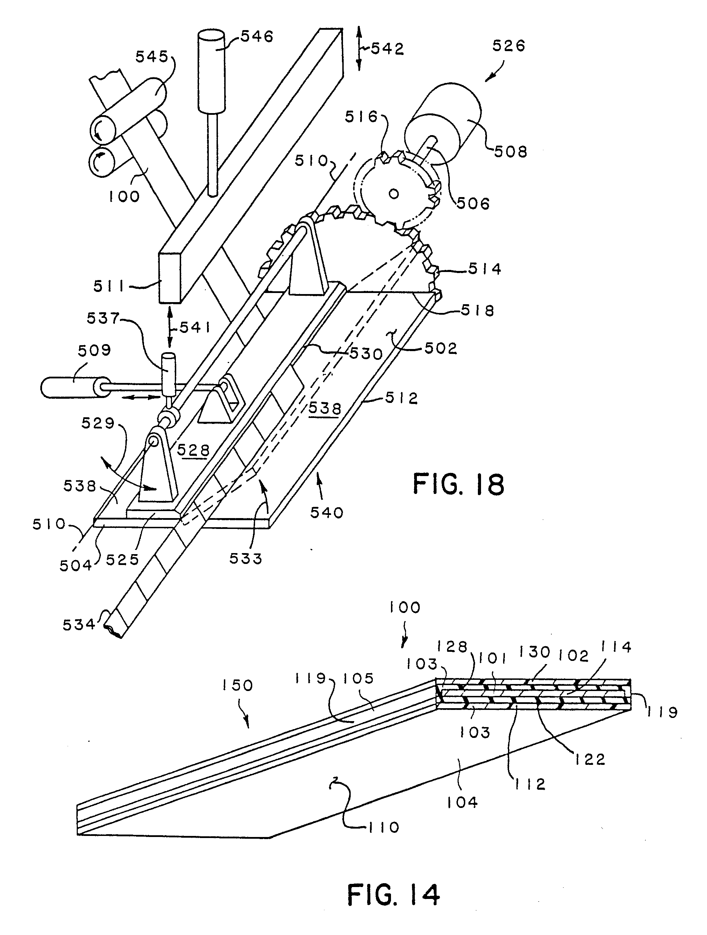

An alternate construction of ribbon 110 is shown in Figure 14. Ribbon cable 150 has a single conductor 114 which is conductive foil bonded to a ribbon 112 of flexible insulation material, or which is conductive paint or other depositions of metal or conductive material on a ribbon 112 of flexible insulation material. Conductor 114 is of a generally rectangual cross-sectional shape. A continuous and uniformly thick coat 128 of flexible insulation material may be superimposed thereon forming a sandwich with the foil or conductive material in the middle.

Conductors 114 may be bonded to the ribbon 112 of flexible insulation material by a continuous and uniformly thick layer of bonding material 122 positioned between the conductor 114 and the ribbon 112. If desired, a continous and uniformly thick coat 130 of bonding material may be placed on the ribbon 112 and/or on the coat 128 of insulation material, as desired.

The ribbon cable 110 of the invention can utilize ribbon 112 of any insulating sheet materials. Those existing at this time include Kapton, Nomex and Mylar materials sold by E. I. DuPont de Nemours & Company. Additionally, insulating material of coats 120, 126 and 128 and bonding material of layer 122 and 130 can be of any magnet wire insulating material or bonding material, respectively. See, for example, those materials in ANSI/NEMA MW1000-1977 Standards. Any of the dimensions of the conductors 114, 124, the dimensions of the coats 120, 122, 126, 128, 130, the dimensions of the ribbon 112, and their relation to each other may vary from use to use.

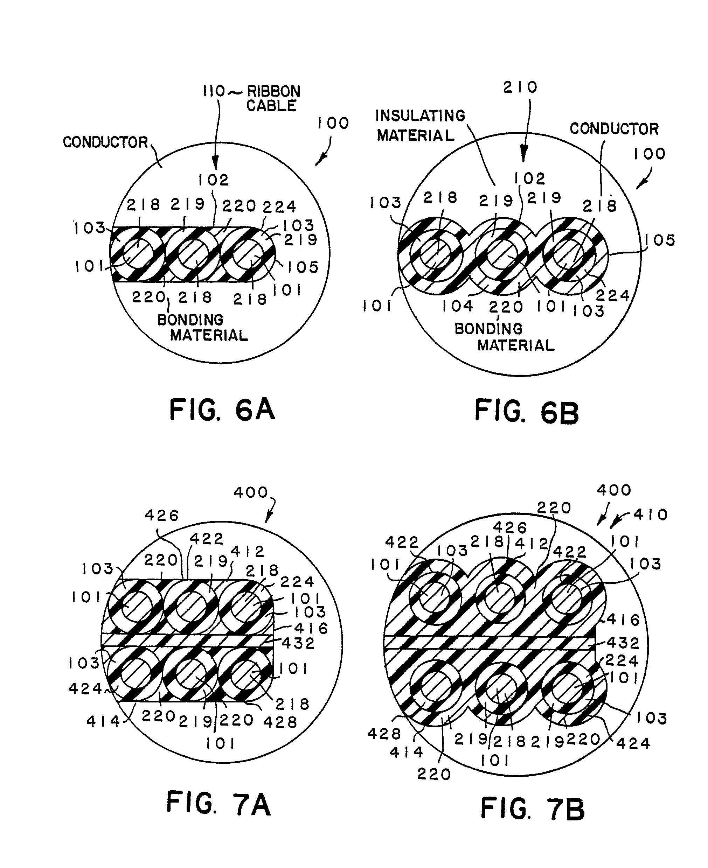

Ribbon cable 210 of the invention is shown in Figs. 6, 6A and 6B to comprise a plurality of juxtaposed conductors 218.

Each of the conductors 218 has superimposed a flexible, continuous and concentric coat of insulating material 219. The conductors 218 are held in fixed relationship to each other by bonding material 220. In a specific embodiment, bonding material 220 has sufficient insulating properties for a particular use and functions as the base insulation for conductors 218.

Insulation material 219 can be applied using conventional magnet wire wrapping or enamel solution coating methods or methods generally disclosed in U.S. Patent No. 4,391,848 or U.S. Patent No. 3,842,192.

In specific embodiments, the insulation of coats 219 and bonding material of coat 220 can be of any magnet wire insulating material or bonding material, respectively. See for example those materials in ANSI/NEMA MW1000-1977 Standards. In specific embodiments, the insulation material and the bonding material of coats 219 and 220 can be the same material.

In some of the cable configurations of the invention, less build and lower dielectric values than required by the ANSI/NEMA MW1000-1977 Standards are acceptable. The lower limits of build and dielectric value are determined by the anticipated turn to turn voltage differentials of the specific contemplated application.

Ribbon cable 210 of the invention has a generally rectangular cross-section. Upper surface 102 and lower surface 104 of ribbon cable 210 are generally parallel and roughly planar to each other with deviations from that shape generally due to the cross-sectional shape of the conductors 218. In a specific embodiment, rectangular cross-section conductors 218 are used and the planarity of the surfaces 102, 104 is better than that shown in Figs. 6, 6A and 6B.

In another ribbon cable 210 illustrated in Fig. 15, ribbon cable 310 comprises a single conductor 218 having superimposed thereon a flexible, continuous and concentric coat of insulation material 219.

Conductor 218 is elongated and of generally rectangular cross-sectional shape. Conductor 218 extends essentially the full length and width of the cable 310. If desired, a continuous and concentric coat 220 of a flexible bonding composition may be superimposed on insulation material 219.

In transposed ribbon cable 400, the ribbon cable 100 is folded over itself, repeatedly, to form transposed ribbon cable 400. The folds 423 of ribbon cable 100 in transposed cable 400 as shown in Figures 4, 7, 7A, 7B, 8 and 16 defines upper segments 422 and lower segments 424 of conductor 101 and upper and lower surfaces 412, 414 of transposed cable 400. Segments 422, 424 are angularly disposed to the longest dimension of the transposed ribbon cable 400 and upper segments 422 are at an adjacent angle to lower segments 424. Each fold 423 positions the conductors 101 of the folded portion at an angle between 0° and 90° to conductors 101 of a preceding portion and to the longitudinal axis 418 of the transposed ribbon cable 400.

The folding of the ribbon cabe 100 being repeatedly in the same direction forms the conductors 101 of the cable into laterally flattened helices which may be juxtaposed. On the other hand, the folding of the ribbon cable 100 being alternatively in opposite directions, forms the conductors 101 into a plurality of superimposed folds Both folding condfigurations are covered by the inventions disclosed herein. The transposed ribbon cable 400 has longitudinal boundaries 416, defined by folds 423, and upper and lower tiers or layers 426, 428 of conductors 101 extending at an oblique angle to the longitudinal axis of the transposed ribbon cable 400.

In the transposed ribbon cable 400 of the invention in which conductors 101 are all in the shape of laterally flattened helicies, upper segments 422 and lower segments 424 are coplanar with each other and at an oblique angle to the longest dimension of the transposed ribbon cable 400 as shown in Figs. 4, 7, 8 and 16. The upper and lower segments 422, 424 of each conductor 101 are sequentially transposed throughout the length of the transposed ribbon cable 400 and conductors 101 within each segment 422, 424 are generally coplanar and generally parallel to the edges 105 of the ribbon cable 100.

The relationship may be described mathematically by the following formulas in which "a" equals the acute angle 403 between the upper and lower segments 422, 424 of the helicies and the longest dimension of the transposed ribbon cable 400, "N" equals the number of conductors 101 in the transposed ribbon cable 400, "d" equals the nominal transverse dimension, or if conductors 101 are round the outside diameter of conductors 101, "W" equals the cable width of the transposed ribbon cable 400 perpendicular to its longest dimension, "P" equals the pitch of the transposed ribbon cable 400, i.e. the distance between successive upper segments 422 or lower segments 424 in a direction parallel to the longest dimension of the transposed ribbon cable 400. "CL" equals the length of the transposed ribbon cable 400, and "SL" equals the strand length or the length of a conductor 101 in a transposed ribbon cable 400 of length "CL":

$$\text{CABLE WIDTH} = \frac{N \ (\text{Nom. OD})}{2 \ \text{Sin} \ (90 - a)}$$

$$\text{STRAND WIDTH} = \frac{L}{\text{Sin} \ (90 - a)}$$

$$\text{FOLDING ANGLE} = -1 \ \frac{N \ (\text{Nom. OD})}{2W}$$

PITCH (advance of cable per machine evolution)

$$= \frac{W}{\text{Sin} \ a}$$

Angle 30 in all embodiments ranges from slightly greater than 0 to slightly less than 90 degress.

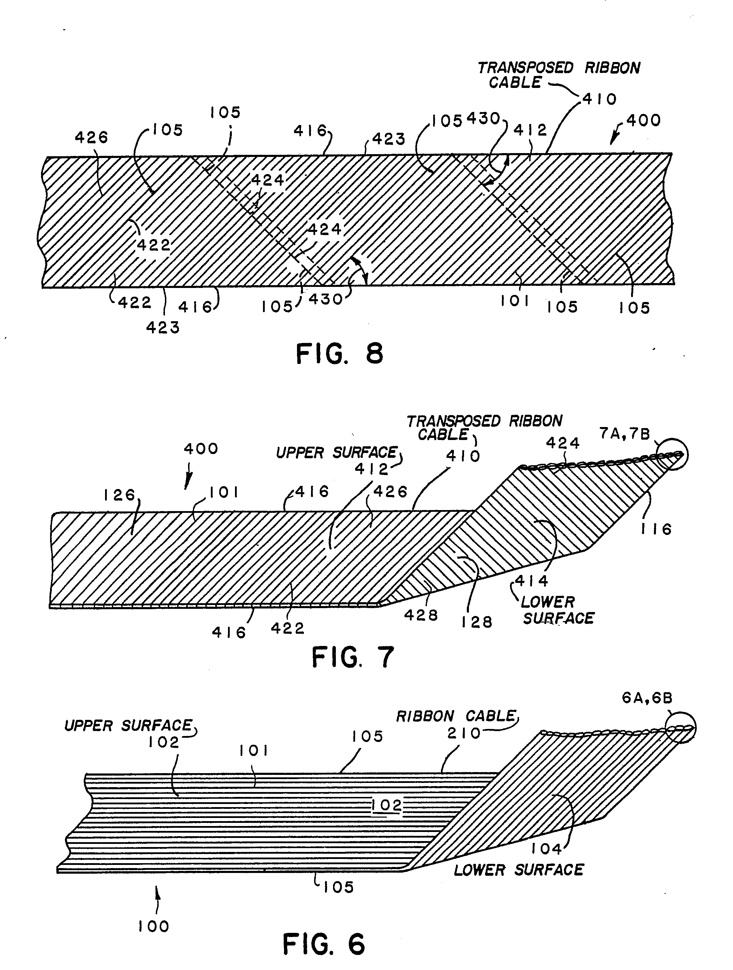

Upper segments 422 are coplanar with each other and lower segments 424 are coplanar with each other and upper surface 412 and lower surface 414 are generally parallel and roughly planar to each other with deviations from that shape generally due to the cross-section shape of the conductors 101. If rectangular cross-section conductors 218 are used in transposed ribbon cable 410, for example, the planarity of the surfaces 412 and 414 is better than that shown in Figure 7.

In the transposed ribbon cable 400, upper and lower tiers 426 and 428, may be bonded together by bonding material 432, which may, for example, be in the form of one or more interposed layers 432 as illustrated in Fig. 16. In a specific embodiment, bonding material 432 may be the same as bonding material 122, 130 and/or 220.

The transposed ribbon cable 410 is an integral cable with the conductors 218 bonded together with bonding material 220 surrounding each conductor 218 and defining with the conductors 218 the boundaries of the cable 410.

In a specific embodiment of the transposed ribbon cable 410 of the invention as shown in Figures 7 and 8, six hundred conductors 218 of .020 inch bare copper are used, each conductor having a superimposed polyvinyl formal enamel coating. Each conductor is bonded to adjacent conductors 218 with a polyvinyl butyral enamel. The three hundred upper segments 422 together with their bonding material 220 form the upper tier 426 and the three hundred lower segments 424 together with their bonding material 220 form the lower tier 428. Tiers 426 and 428 are bonded together with bonding material 432.

In other embodiments, conductors 101 may number between one and several thousand

The ribbon cable 100 of which the transposed ribbon cable 400 is formed can be any of the ribbon cables afore-described, however, if bare conductors 101 are used, conductor 101 to conductor 101 insulation must be provided.

One method of the invention for making transposed ribbon cable 400 comprises the steps of wrapping ribbon cable 100 obliquely around a laterally flattened mandrel 434 at a chosen constant angle to achieve the desired pitch to form transposed cable 400 and removing the transposed cable 400 from the mandrel 434 to form a plurality of juxtaposed laterally flattened helices having upper segments 422 and lower segments 424, applying bonding agent 436 between helices and the upper and lower segments 422, 424, as segments 422, 424 are being formed or after segments 422, 424 are formed by impregnation techniques, and severing the transposed ribbon cable 400 formed thereby at opposite ends to expose a plurality of conductor 101 ends.

Alternatively, ribbon cable 210 may be formed during the process by insulating one or more conductors 218 using conventional magnet wire enamel solution coating methods or the methods generally disclosed in U.S. Patent No. 4,391,848 and then wrapping the insulating conductors 224 or conductors 224 around the mandrel 434 as described above. An umlimited number of insulated conductors 224 may be positioned in one or more bands of generally coplanar insulated conductors 224 and then wrapped around the mandrel 434.

In a specific embodiment, the bonding agents 436 may be, for example, a bonding material 432 or an activator (such as heat or a solvent) of a B-stage bonding material 130 or 220 or 432 previously applied to the conductors 101.

In same configurations less build and lower dielectric values than required by the ANSI/NEMA MW1000 Standards are acceptable. The lower limits of build and dielectric value are determined by the anticipated turn to turn voltage differentials of the specific contemplated application.

The cable 400 is then compressed both in directions transverse and axial to the longest dimension of the cable 400. Upper segments 422 and lower segments 424 are compressed together and at right angles thereto so as to form transposed ribbon cable 400 and its juxtaposed laterally flattened helix or helices. The longitudinal boundaries 416 of transposed ribbon cable 400 may be then rolled to result in a compact generally rectangular cross-sectional cable with a roughly planar upper tier 426 and a roughly planar lower tier 428.

In a specific embodiment, the compressing step is performed simultaneously with the wrapping and removing steps by differentially transporting conductors 101 in the direction of transport as the wrapping, removing and bonding steps are performed.

The ribbon cable 400 can be wrapped with exterior insulation material either spirally or longitudinally and spooled for shipping as desired.

In some of the embodiments of the method above-described, the source of the conductors 101 for the wrapping step are a plurality of wire spools 442 mounted for rotation on a plurality of spindles. To achieve the wrapping step, either the spools 442 must be rotated around the mandrel 434, or the mandrel 434 must be rotated around the spools 442. The number of conductors 101 used in the method may determine the apparatus used in performing the method and the number of steps performed at a single work station.

In another method of the invention for producing transposed ribbon cable 400, conductors 218 are first formed into the longitudinal ribbon cable 210 of Figures 6, 6A and 6B. The method of making the ribbon cable 210 includes the step of insulating a plurality of conductors 218 using conventional magnet wire wrapping or enamel coating methods or those methods disclosed in U.S. Patent No. 4,391,848, paying out as many insulated conductors 224 as are required, simultaneously, the guiding the conductors into the form of a band 438 wherein the longitueinal axis of each conductor 218 is parallel to the axes of the others and conductors 218 define a single plane. The exterior surfaces of each insulated conductor 224 are contiguous to adjacent insulated conductors 224.

The conductors 218 are then bonded together to form ribbon cable 210. The bonding step can be performed either by utilizing a B-stage bonding material superimposed on the insulated conductors 218 subsequent to the insulating step and then performing the bonding step by activating the bonding material during the bonding step. Alternatively, bonding material may be applied to the contiguous and parallel conductors 224 of the band 438 during the bonding step and after the performance of the guiding step. Preferably, care should be taken to impregnate or fill all of the intersticies between the conductors 224. This can be achieved by utilizing modified vacuum impregnation techniques or pressurized bonding techniques, if desired.

The bonding step continues by wiping the excess of the bonding material from the band 438 and hardening the bonding material so as to form ribbon cable 210. During the wiping and hardening steps, the respective insulated conductors 224 are maintained in the same position as afore-described in the guiding step and upper surface 102, lower surface 104 and edges 105 are formed.

In a specific embodiment, conductors 224 may be insulated and formed together as a band 438 and bonded together with a bonding material extruded onto the conductors 224 by transporting the conductors 224 through a heated die with an opening slightly larger than the dimensions of the band 438, and quenched or applied to the conductors 224 in some other manner.

In manufacturing transposed ribbon cable 400, the ribbon cable 100 is folded over itself, repeatedly, to produce transposed ribbon cable 400 as shown in Figs. 4, 7, 7A, 7B, 8 and 16. The folding of the cable 100 to form the transposed cable 400 forms each of the conductors 101 of the cable 100 into a plurality of

7

juxtaposed laterally flattened helices having upper segments 422 and lower segments 424. Each fold positions and conductors 101 of the folded portion agnularly with respect to the conductors 101 of the preceding portion and with the axis of the transposed cable 400.

The folding step comprises the steps of paying out the ribbon 100 at an angle to the desired axis of the transposed ribbon cable 400 a measured amount, folding the ribbon cable 100 in a first direction, against a first straight edge such as the edge of a flat folding mandrel 434 rotating the folded cable in the direction of the fold to form a first longitudinal boundary 416 of the transposed ribbon cable 400 and folding the ribbon cable 100 about a second straight edge such as the edge of the folding mandrel 434, in a second direction opposite to the first direction to define the opposite longitudinal boundary 416 of transposed cable 400. The first and second straight edges of mandrel 434 are parallel to each other, and spaced from each other the desired cable width.

Ribbon cable 100 is then paid out a second measured amount to move the fold so as to position the straight edge coincident with the opposite longitudinal boundary of the transposed cable 400 and ribbon cable 100 is folded and rotated in the same direction, again. Ribbon cable 100 is repeatedly paid out and folded alternatively in opposite directions in this manner. If the straight edge is the edge of mandrel 434, cable 100 is paid out a second measured amount to move the second fold so as to be coincident with the first straight edge of the mandrel 434, and cable 100 is then folded and the steps repeated a third time.

Simultaneously with the folding step, bonding material 432 may be positioned between the folded portions. Subsequently thereto, the folded portions may be compressed and bonded together to form transposed ribbon cable 400. Again the bonding step, in specific embodiments, may include the aforementioned application of solvent or heat, or the use of vacuum or pressure impregnating techniques or B-stage bonding materials. The transposed ribbon cable 400 formed by this method is then severed at opposite ends to expose a plurality of conductor 101 ends, and may then be wrapped with exterior insulation material, either spirally or longitudinally, and spooled for shipment.

As the ribbon cable 100 is folded repeatedly to form the laterally flattened helix or helicies of the transposed cable 400 as above-described, the axis of the transposed cable 400 is repeatedly moved, and cable 100 is successively paid out an amount equal to the distance between a position corresponding to one longitudinal boundary 416 of transposed cable 400 and a position corresponding to the opposite longitudinal boundary 416 of the cable 410. The two positions of the axis of transposed cable 400 are parallel to each other and spaced apart a distance equal to the cable width.

This motion of the longitudinal axis of transposed cable 400 and the repeated folding requires the take-up spool to move with the axis a distance equal to the cable width and either the take-up spool or the pay-out spool to rotate with each fold of ribbon cable 100 when forming laterally flattened helices. When not forming laterally flattened helices, the spools may need to rotate only a partial revolution or sufficient slack in the ribbon cable 100 may alleviate the necessity of spool movement.

In all of the aforementioned folding and wrapping steps, the folding and wrapping stations may be stationary and the insulated conductors 224 and ribbon cable 100 pay-off reels rotated around the folding mandrel; or in the alternative, the folding and wrapping stations may be rotated about pay-off reels from which ribbon cable 100 or insulated conductors 224 are supplied to the folding or wrapping stations as afore-described. The specific apparatus used in the performance of the method of the invention will be described in more detail hereinafter.

Depending upon the bonding material utilized, ovens heated dies or the like may be used in the bonding step. Conventional bonding materials may either be thermoplastic and thereby softened and made flowable by the application of heat or may be softened by the application of solvents later to be driven off by the application of heat. Whenever heat is utilized in the bonding steps afore-described, a water quench or air cooling may be necessary.

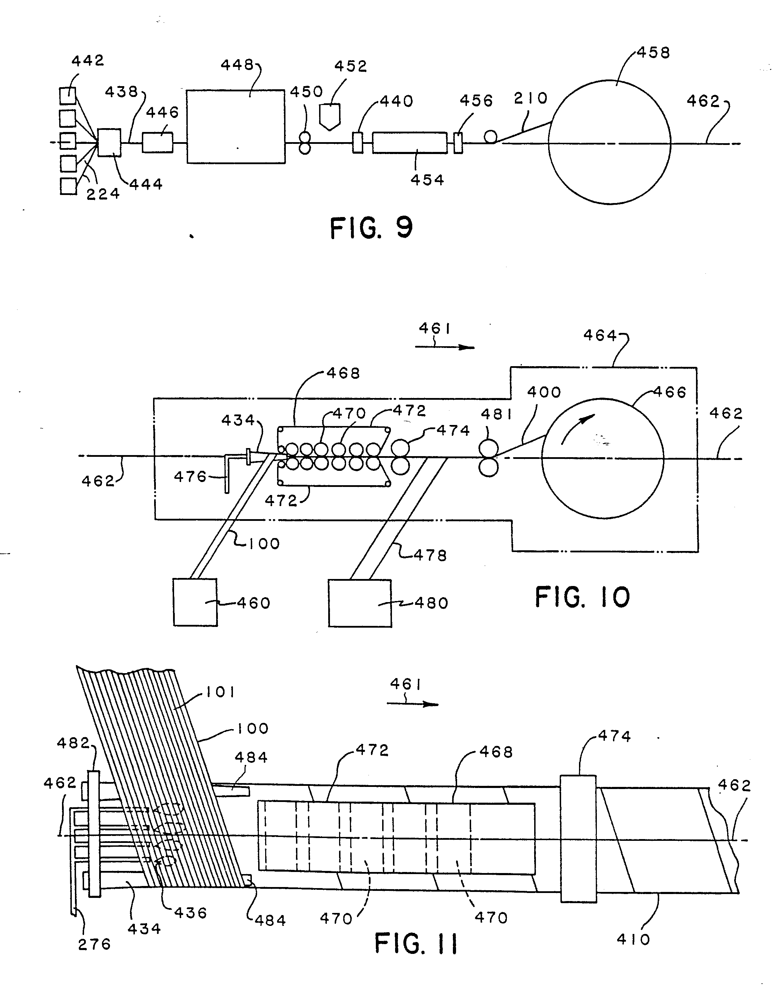

Referring now to the apparatus of the invention as illustrated in Figs. 9 through 11, in making ribbon 210, conductors 218 are first insulated as above-described, and may be spooled for handling. B-stage bonding materials may be superimposed on the insulated conductors 224 if desired in accordance with the afore-described insulating methods. Insulated conductors 224 are transported then from conductor supplies or spools 442 or directly through a guide 444 to form the insulated conductors 224 into a band 438 of parallel coplanar conductors 218. Suitable bonding material 220 may be applied to the band 438 by applicator 446. Applicator 446 may take several forms in different specific embodiments. Applicator 446 in all embodiments must hold insulated conductors 224 in the form of band 438 throughout the bonding step and until the bonding material is hardened and band 438 bonded together as in a single piece. In specific embodiments, the applicator 446 may be a heated extrusion die in which the die opening is geometrically similar and only slightly different from the desired cross-sectional dimensions of the ribbon cable 210. In accordance with conventional extrusion technology, the die opening may be either larger or smaller than the desired dimensions of the cable 210.

In another specific embodiment, the applicator 446 may be a heated channel also having a channel opening with a cross-sectional shape geometrically similar but slightly larger than the desired dimensions of cable 210. In this embodiment, the channel merely holds band 438 in the shape desired and shapes the exterior dimensions ribbon cable 210 has when the bonding material hardens.

In other specific embodiments, the parallel coplanar conducltors 218 may be held in the form of band 438 by oppositely disposed side portions of guide 444. Edges 105 of ribbon cable 210 are formed by the continual wiping of band 438 on the oppositely disposed side portions. Upper surface 102 and lower surface 104 are formed by wipers or knives which continually wipe excess bonding material from the band 438.

Bonding material 220 is activated by passing the ribbon through an oven 448, or alternatively by exposing the bonding material 220 to a solvent therefore followed by air or oven drying. Bonding material 220 is softened into a flowable form in both embodiments. Oven 448 softens bonding material 220 in the former case, and drives off the solvent in the later case. Heat may also be used to assist a solvent in softening bonding material 220. In all cases, oven 448 may additionally cure either the insulation 219 or bonding material 220, or both.

Ribbon cable 210 is then transported through pressure rollers 450. In the specific embodiment illustrated, additional bonding material 220 is applied to ribbon cable 210 by means of applicator 452, Which may be an extruder, and ribbon cable 210 is transported through a heated die 440 and a quenching unit 454. Thus two specific embodiments of apparatus for applying bonding material 220 to the band 438 are shown. In other specific embodiments, a single embodiment or a combination of the two different embodiments may be used. Excess bonding material 220 is removed by wipe 456 which may use pressurized air as an air wipe.

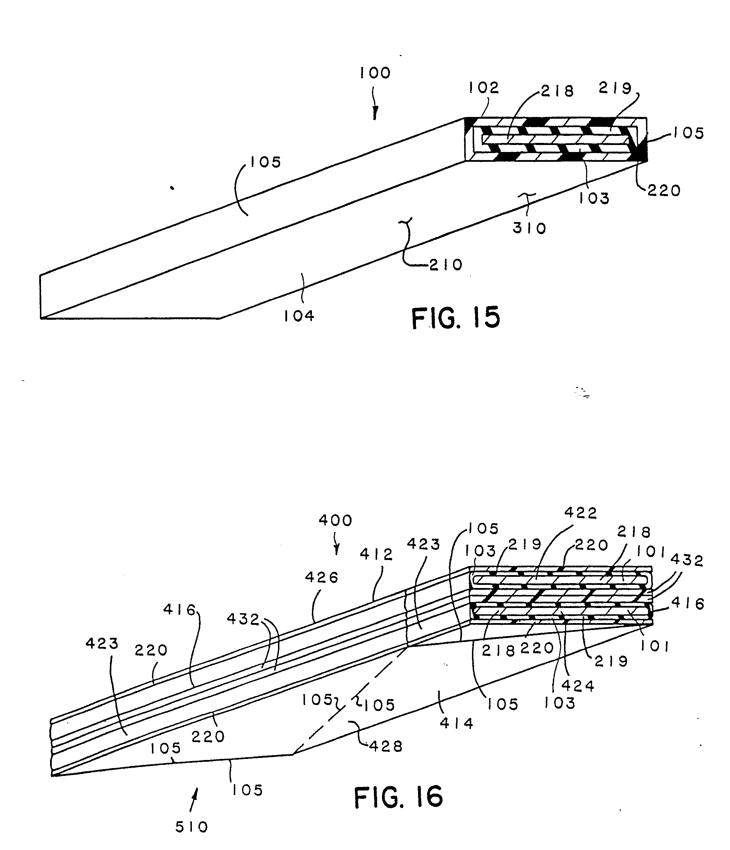

The finished longitudinal rbbon cable 210 is either wound onto a take up reel 458 which also provides the motive power for the transportation or is input into the remaining portion of the apparatus by which the transposed ribbon cable 400 of the invention is manufactured. This remaining portion of the apparatus of the invention for the production of transposed ribbon cable 400 is illustrated in Figures 10 and 11.

The manufacturing of ribbon cable 210 and the manufacture of transposed ribbon cable 400 and the winding of a field or armature winding may all be done successively without utilizing the take up reels or spools in tandem. Both the drawing and insulation of conductors 218 by the conventional wrapping or solution coating methods or by the methods disclosed in U.S. Patent Nos. 3,842,192 and U.S. Patent No. 4,391,848 allow tandem operation if desired.

Referring to Figs. 10 and 11, wire supply 460 delivers either ribbon cable 100 or one or more conductors 224, as the case may be, to folding mandrel 434 to form a plurality of laterally flattened continuous helices defined by each conductor 101. The wrapping is performed by changing the relative position of mandrel 434 and wire supply 460 in a rotation about the axis 462 and folding the conductors 101 or ribbon cable 100 about the outer straight edges of mandrel 434. The relative rotation of wire supply 460 around the axis 462 and mandrel 434 may be achieved by either rotating wire supply 460 around the axis 462 and maintaining mandrel 434 stationary or by rotating mandrel assembly 464 about the axis 462 and maintaining wire supply 460 stationary. Conventional machine elements may be used to provide these motions.

Conductor supply 460 at all times pays out conductor 218 on conductors 218 or ribbon cable 100 at an oblique angle 430 to the axis 462 of mandrel 434 as the relative movement occurs. As discussed above, angle 30, illustrated in Figure 8, determines the ratio of the cable width to the cable pitch. As the wrapping occurs, bonding agent applicator 476 applies bonding material 220 between tiers 426, 428, as desired. Mandrel 434 is longitudinally tapered in the direction of cable movement indicated by arrow 461 in Figs. 10 and 11. This tapering of mandrel 434 allows ribbon cable 100 and conductors 218 to be properly folded and the folded cable 400 to be easily removed from mandrel 434.

In one embodiment, the lateral dimension of mandrel 434 can be selectively varied. This permits transposed ribbon cable 400 of different cable widths to be produced on the same mandrel 434. In that embodiment, mandrel 434 has a central member 482 perpendicular to the axis 462 and two spaced members 484 adjustably joinable to central member 482 at any of a variety of pairs of points equidistant from the axis 462. Members 484 either have slightly tapered outer edges or are secured to central member 482 at an angle to provide the desired taper.

The apparatus of the specific embodiment illustrated uses a caterpillar 468 to both move and compress the cable 400 after cable 400 is moved off mandrel 434. Caterpillar 468 comprises a series of opposed rollers 470 interconnected on each side by belts 472 through which cable 400 is fed. The opposed rollers 470 are spaced apart at a distance required to compress the cable 400. In a specific embodiment, the rollers 470 are arranged in order of increasing diameter along the direction of travel of cable 400 and all of the rollers 470 on one side of cable 400 are rotated simultaneously by the movement of cable 400. The differential of the sizes of the rollers 470 causes the movement of cable 400 to be slowed as the cable 400 proceeds in the direction of travel. This causes the conductors 101 of cable 400 to simultaneously bunch up and cable 400 to compress both in the direction of transport and in directions perpendicular to the direction of transport.

The speed of movement of cable 400 relative to the wrapping of ribbon cable 100 or conductors 218 around mandrel 434 determines the pitch of the transposed ribbon cable 400 produced. Longitudinal boundaries 416 are then formed by rollers 474.

Transposed cable 400 can then be wrapped with insulating material 478 delivered by material supply 480, if desired. The wrapping shown is spiral wrapping. Longitudinal wrapping as disclosed in U.S. Patent No. 3,842,192 may be preferred in some applications. Rollers 481 secure the insulating material, and may be heated if desired. The finished transposed cable 400 is transported onto a take up reel 466 for shipping. Bonding materials 130, 220 and 432 have been disclosed hereinabove to be activated by the application of heat, or by the application of solvents, or both. In the apparatus illustrated in Figs. 10 and 11, heat is applied by pre-heating the bonding material prior to application, heating the mandrel 434, or heating the rollers 470 and 481. Alternatively, an oven and a quench, such as oven 448 and quench 454, can be positioned on opposite sides of the caterpillar 468 and rollers 474. Sufficient solvent usually can be applied with the bonding material by applicator 476 to reactivate any bonding material on the conductors 101 or the cable 100. Additional solvent, however, can be supplied as desired.

In other specific embodiments, an essentially continuous and concentric coat of flexible bonding material is superimposed on the coat of insulating material 219 by the same methods as above disclosed.

Generally, no additional bonding material need be applied to adhere the wrapped insulating material 478 to the cable 400. Generally, the wrapping of insulating material 478 occurs while the bonding material is still activated and the bonding material adheres the wrapping 478 to the cable 400. However, additional activation may be supplied by applying heat or solvent, as desired, prior to the rollers 481.

Figure 17 schematically illustrates an alternative specific embodiment of an apparatus used to manufacture transposed ribbon cable 400 of the invention from the ribbon cable 100 by repeatedly folding the ribbon cable 100 over itself to form both the ribbon cable 100 and its respective conductors 101 into a plurality of laterally flattened helices or multiple superimposed folds. As schematically shown, a supply of cable 100 is placed on a spool 520 which is mounted for rotation about an axis 522. Ribbon cable 100 is paid out from the spool 520 onto folding table 540 so as to define a longitudinal axis 524. Folding table 540 comprises a folder 526 having a folding member 528 with a straight folding edge 530. A folding portion 532 of table 540 is pivoted to rotate about an axis 534. The angle between the axis 524 and the folding edge 530 determines the relationship between the pitch and the width of transposed cable 400. Axis 534 is parallel to folding edge 530 of member 528 and positioned in the folding surface 538 of folding portion 532. The folding portion 532 rotates about the axis 534 so as to overlay the folding surface 538 of portion 532 and table 540 one on the other. All of the motion of the folding portion 532 is relative to folding table 540 which supports ribbon cable 100 during the folding operation and can be achieved by conventional machine elements.

In operation, the ribbon cable 100 of the invention is fed along the axis 524 so as to extend beyond folding edge 530 of folder 526. Folding member 528 is positioned to overlay cable 100 and folding portion 532 is actuated to move in the direction of arrow 550 about axis 534 so as to fold cable 100 over folding edge 530. This folding defines one longitudinal boundary 416 of the transposed ribbon cable 400.

By further advancing ribbon cable 100 in the direction of axis 534, the cable 100 is again folded at folder 526. Similarly, folding member 528 is positioned over ribbon cable 100 and folding portion 532 is actuated to move about axis 534 so as to fold ribbon cable 100 over itself and to position folding surface 538 in an overlaying position on folding member 528 with the folded portions of the ribbon cable therebetween. This folding defines the opposite longitudinal boundary 416 of the cable 400 and forms each conductor into laterally flattened helices.

After each fold, folding station 526 is opened and the ribbon cables 100 and 400 are advanced by take-up spool 544, the rollers 474, 481 and advancer 545, so as to position the opposite longitudinal boundary 416 of the cable 400 in alignment with folding edge 530 of the folding station 526, and a fold at the folding station 526 is again performed. Rollers 474 and 481 are only engaged to cable 400 when folding is not occurring. Otherwise, both rollers 474 and 481 are spaced from cable 400 sufficiently to allow cable 400 to rotate about axis 534 as indicated by arrow 550. Ribbon cables 100 and 400 are then again advanced along axes 524 and 534, respectively, and a fold is repeated. By repeatedly advancing the ribbon cable 100 and the repeatedly folding at folding station 526, transposed cable 400 is produced.

Referring to Figure 18, folder 526 has a stationary portion 504 and a movable portion 502, both with an upwardly facing generally planar folding surface 538, 536 respectively. The movable portion 502 is hingedly movable about an axis 534 located in the folding surface 538 from a first position 512 shown in solid lines in which the folding surface 536 of the movable portion 502 forms a continuation of said folding surface 538 of the stationary portion 504 to a second position in which the movable portion 502 overlays the stationary portion 504 as indicated by the arrow 533. Movable portion 502 is forcibly moved between its first and second positions by means of a gear 514 driven by a pinion gear 516. Gear 514 is secured to movable portion 5102 at juncture 518. Pinion gear 516 is secured to the shaft 506 of motor 508. The opposite end of folder 526 is open.

A folding member 528 is positioned above folding table 540 and has a straight folding edge 530. Folding member 528 is movable up and down a small distance (no more than twice the thickness of cable 400) by power cylinder 537 as indicated by arrow 541, and movable by a power cylinder 509 about an axis 510 from a position 525 in which the folding member 528 is superimposed on the folding surface 538 of the stationary portion 504 with the folding edge 530 and the axis 534 defining a common plane to a position remote therefrom as indicated by the arrow 529.

A press 511 is provided to press the fold initially made by the folding member 528. Press 511 is movable from a position in which the press is also superimposed on the folding surface 538 of the stationary portion 504 adjacent to axis 534 to a position remote therefrom as indicated by the arrow 542. Press 511 is movable by a power cylinder 546. Both press 511 and folding member 528 are positioned on stationary portion 504 in the same position when in their superimposed positions, respectively.

Ribbon cable 100 is advanced by ribbon cable advancer 545 angularly of folding edge 530 and overlaid folding surface 538. Ribon cable advancer 545 is synchronized with rollers 474 and 481 so as to advance ribbon cable 100 and transposed ribbon cable 400 correspondingly at the same time. Folding member 528 is moved into its position 525 with folding edge 530 and axis 534 forming a common plane and with ribbon cable 100 positioned between folding surface 538 and folding member 528. Folding member 528 then is moved by cylinder 537 to clamp ribbon cable 100 between folding member 528 and surface 538. Movable table portion 502 is then moved from its first position 512, by actuating motor 508, into its second and overlaying position to fold the ribbon cable about folding edge 530. Once the fold is accomplished, folding member 528 is both moved upward by cylinder 537 and into its remote position by cylinder 509; movable portion 502 is moved into its first position 512 in which its folding surface 536 forms a continuation of the folding surface 538 of the stationary portion 504; and press 511 is moved by power cylinder 546 into its overlaying position so as to press the fold just made. Press 511 is then moved into its remote position and ribbon cable 100 and transposed ribbon cable 400 are advanced.

Still referring to Figs. 17 and 18, similarly, the ribbon cable 100 of the invention may be folded so as to define a plurality of superimposed folds by the apparatus illustrated. In this operation, the ribbon cable 100 of the invention is fed along axis 524 so as to extend beyond folding edge 530 of folder 526 and folder 526 is operated to fold the ribbon cable 100 as above described. A second folder 526 (not shown) is positioned subsequent (between folder 526 and rollers 474) to the folder 526 shown in Fig. 17 so as to produce a fold in the opposite direction shown in Fig. 18. Both folders function as described hereinabove so as to position a folded portion over an unfolded portion of the ribbon cable 100. The second folder 526 has the identical structure as described herein with regard to the folder 526 but is provided in its mirror image so as to have its open end facing in the same direction. The folding of the ribbon cable by the two folders 526, however, does not require the folded transposed ribbon cable 400 to rotate fully around axis 534. In a specific embodiment contemplated by the invention, the rotation of spool 544 is not required at all, but sufficient slack in the ribbon cable 400 between spool 544 and folder rollers 481 alleviates the need for rotation of spool 544 about axis 534.

The transposed ribbon cable 400 of the invention can then be wrapped with insulating material 478 delivered by material supply 480 if desired as discussed above.

Referring again to Figure 17, a take-up spool 544 is provided to either spool the product for shipment or handling or storage. Spool 544 is mounted for rotation about axis 555 and is mounted for movement along axis 555 between a first position 553 shown in solid lines in Figure 17 and another position 554 shown in dashed lines in Figure 17 and for rotation about axis 534 in the embodiments above-described in which cable 100 is formed into a plurality of laterally flattened helices.

The movement of spool 544 is coordinated with the folding of the ribbon 100 about edge 530 of folder 526. Thus, whenever ribbon 100 is in folder 526, the cable 400 is in position 553 as shown in solid lines in Figure 17. The cable is folded in folder 526 and the spool 544 is rotated about axis 534 as indicated by arrow 550 into its position 554. Upon the advancement of ribbon cable 100 into folding station 526, spool 544 is moved from position 554 as shown in dashed lines in Figure 17 back to position 553 as shown in solid lines in Figure 17. The motion of the spool 544 is then repeated, as the repeated folding of cable 100

0 274 173

is performed.

In another specific embodiment in which the folding of cable 400 forms the conductors into laterally flattened helices, the spool 544 is mounted for rotation about axis 555 in a single position, and spool 520, folding table 540 and folder 526 are rotated about axis 534 upon each fold being made.

Still referring to Fig. 17, in another embodiment in which a field or armature winding is manufactured in tandem with the ribbon cable 100 and transposed ribbon cable 400 of the invention, take up spool 544 is replaced by a coil winding apparatus suitable for shaping an armature, a transformer core, or field of an electromagnetic device. In this embodiment, the coil winding apparatus is mounted for rotation about axis 534 and movement along axis 555 between the first position 553 shown in solid lines in Fig. 17 and another position 554 shown in dashed lines, and rotated about axis 534 like take up spool 544 when the folding results in laterally flattened helices. On the other hand, when the folding results in a plurality of superimposed folds, take up spool 544 and/or the coil winding apparatus, as the case may be, need not be mounted for movement along axis 555, but can be positioned in position 553 and mounted so as to rotate about axis 555, as afore-mentioned.

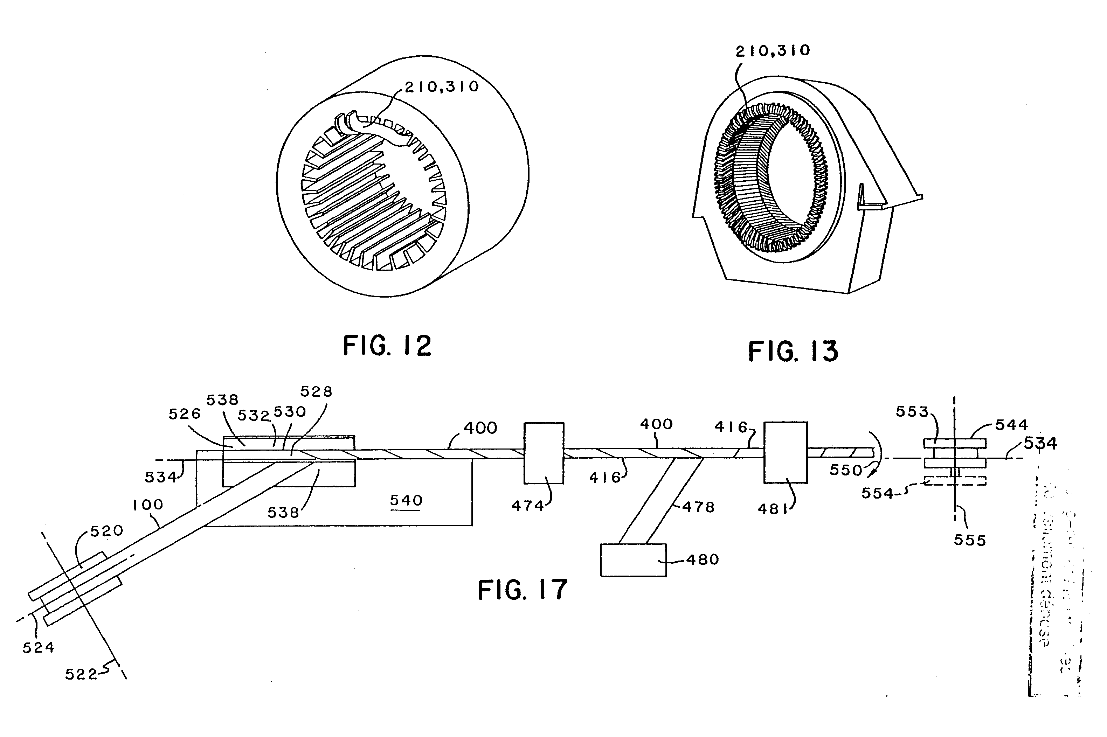

Referring now to Figs. 12 and 13, specific embodiments of the improved electromagnetic devices of the invention are shown. Shown in Fig. 13 in an armatuare having as its magnetic windings the cable 100 or 400. Fig. 12 shows a stator having as its magnetic windings cable 00 or 400. In both instances, the improved electromagnetic devices have improved windings in which energy losses are greatly reduced, resulting in an improved electromagnetic device having a greatly improved efficiency.

While a specific embodiment of the invention has been shown and described herein for purposes of illustration, it is desired that the protection afforded by any patent which may issue upon this application not be limited strictly to the disclosed embodiment; but that it extend to all structures and arrangements and methods and articles which contain the essence of the invention and which fall within the scope of the claims which are appended herein.

## Claims

1. A ribbon cable comprising a plurality of elongated conductors extending the full length of the cable, said conductors being insulated from each other, said conductors being bonded side by side in spaced relation to each other, said conductors each having an axis, said axes being parallel and coplanar, insulation connected to said conductors, and at least one layer of bonding material superimposed on said insulation, each said layer of bonding material defining one of a pair of opposed surfaces of said ribbon cable.

2. The ribbon cable of Claim 1 wherein said insulation further comprises a ribbon of flexible insulation material, said ribbon having a longitudinal axis generally paralle to said conductor axes, said ribbon being bonded to said conductors.

3. The ribbon cable of Claim 2 wherein said conductors each further comprise a bare conductor and an essentially continuous and concentric coat of flexible insulating material superimposed on said conductor.

4. The ribbon cable of Claim 3 wherein said conductors comply with ANSI/NEMA Standards MW1000-1977 excepting the dimensional and dielectric standards, said dimensional and dielectric standards being equal to ANSI/NEMA MW1000-1977 standards or less.

5. The ribbon cable of Claim 3 wherein said conductors are disposed side by side with said insulating material of adjacent said conductors being contiguous.

6. The ribbon cable of Claim 2 wherein said conductors are chosen from the group consisting of aluminum and copper conductors, conductive foils and strips, conductive paint, and depositions of conductive material.

7. The ribbon cable of Claim 2 wherein said bonding material is softenable.

8. The ribbon cable of Claim 2 wherein said bonding material is a continuous and uniform layer of flexible bonding material superimposed on said ribbon and wherein said ribbon is between said conductors and said coat of bonding material.

9. The ribbon cable of Claim 2 further comprising a continuous and uniform first layer of flexible insulating material superimposed on said ribbon between said conductors, said first layer of insulating material being bonded to said ribbon and said conductors.

10. The ribbon cable of Claim 9 further comprising a continuous and uniform second layer of flexible insulating material superimposed on said conductors and said first layer of flexible insulating material.

11. The ribbon cable of Claim 10 wherein said bonding material is a continuous and uniform coat of bonding material superimposed on said second layer of insulating material.

12. The ribbon cable of Claim 10 wherein said bonding material is the same material as said insulating material.

13. The ribbon cable of Claim 10 wherein said first layer of insulating material and said second layer of insulating material are applied as a single coat of insulating material.

14. The ribbon cable of Claim 1 wherein said ribbon cable is folded into transposed ribbon cable having conductor axes angularly disposed to the longitudinal axis of said transposed ribbon cable, said conductors being folded at the boundaries of said transposed ribbon cable, said transposed ribbon cable having two tiers of said conductors.

15. A ribbon cable comprising one or more elongated conductors extending the full length of the cable, said conductors being insulated from each other, said conductors being bonded in spaced relation to each other, said conductors each having an axis, said axes being parallel and coplanar, insulation connected to said conductors, said conductor axes being angularly disposed to the longitudinal axis of said ribbon cable, said conductors bein folded at the boundaries of said ribbon cable, said ribbon cable having two tiers of said conductors.

16. The ribbon cable of Claim 15 wherein said conductors define one or more laterally flattened helices.

17. The ribbon cable of Claim 15 wherein said conductors folded at said boundaries define contiguous folded portions, and wherein said conductors define a plurality of laterally flattened juxtaposed helices, said helices having contiguous upper segments and contiguous lower segments, said upper segments being oblique to said longitudinal axis and at adjacent angles to said lower segments of said conductors, said lower segments of said conductors being oblique to said longitudinal axis and at adjacent angles to said upper segments of said conductors, and said upper segments being insulated from said lower segments.

18. The ribbon cable of Claim 15 wherein said conductors define a plurality of laterally flattened, juxtaposed helices and wherein the width of said ribbon cable in the direction of said lateral flattening is essentially equal to the number of conductors in said plurality of laterally flattened juxtaposed helices multiplied by the nominal outside transverse dimension of said conductors divided by twice the cosine of the acute angle between said conductors of said laterally flattened helices and the longitudinal axis of said ribbon cable.

19. The ribbon cable of Claim 15 wherein said conductors define a plurality of superimposed folds.

20. The ribbon cable of Claim 15 wherein said tiers of conductors are bonded together.

21. The ribbon cable of claim 15 wherein said conductors are chosen from the group consisting of aluminum and copper conductors, conductive foils and strips, conductive paint, and depositions of conductive material.

22. The ribbon cable of Claim 15 wherein the number of said conductors is greater than 31.

23. The ribbon cable of Claim 15 further comprising at least one layer of bonding material superimposed on said insulation.

24. The ribbon cable of Claim 23 wherein said bonding material is softenable.

25. The ribbon cable of Claim 15 wherein said insulation further comprises one or more continuous and concentric coats of flexible insulating material, said coats of flexible insulating material being individually superimposed on individual said conductors thereby forming insulated conductors.

26. The ribbon cable of claim 25 wherein said insulated conductors comply with ANSI/NEMA Standards MW1000-1977 excepting the dimensional and dielectric standards, said dimensional and dielectric standards being equal to ANSI/NEMA MW1000-1977 standards or less.

27. The ribbon cable of Claim 25 wherein said insulated conductors are disposed side by side with said insulation material of adjacent said conductors being contiguous.

28. The ribbon cable of Claim 27 further comprising bonding material in the interstices between said insulated conductors, said bonding material with said insulated conductors generally defining the exterior configuration of said ribbon cable.

29. The ribbon cable of Claim 25 wherein said bonding material is the same material as said insulation material.

30. The ribbon cable of Claim 15 wherein said insulation further comprises a ribbon of flexible insulation material, said ribbon having a longitudinal axis generally parallel to said conductor axes, said ribbon being bonded to said conductors.

31. The ribbon cable of Claim 30 wherein said insulation further comprises a continuous and uniform layer of flexible insulating material superimposed on said ribbon between said conductors, said first layer of insulation material being bonded to said ribbon and said conductors.

32. The ribbon cable of Claim 31 wherein said insulation further comprises a continuous and uniform second layer of flexible insulating material superimposed on said conductors and said first layer of flexible insulating material.

33. The ribbon cable of Claim 32 wherein said bonding material is a continuous and uniform coat of bonding material superimposed on said second layer of insulating material.

34. The ribbon cable of Claim 32 wherein said bonding material is the same material as said insulating material.

35. The ribbon cable of Claim 31 wherein said first layer of insulating material and said second layer of insulating material are applied as a single coat of insulating material.

36. The ribbon cable of Claim 30 wherein said bonding material is a continuous and uniform layer of flexible bonding material superimposed on said ribbon and wherein said ribbon is between said conductors and said coat of bonding material.

37. The ribbon cable of Claim 30 further comprising a coat of flexible bonding material superimposed on said ribbon between said conductor and said ribbon.

FIG. 1

## CONDUCTORS

INSULATION MATERIAL

BONDING MATERIAL

RIBBON

FIG. 2

FIG. 4

FIG. 3

126　　124-CONDUCTORS

100　130　　　　　　　　　　　　　　　　　130　　110

128

INSULATION—126　103　　　　　　　　　　　　　　　128·INSULATION MATERIAL
MATERIAL　　101　　　　　　　　　　　　　　　　126
　　　　　105　　　　　　　　　　　　　　　　　101
　　　　　119　　　　　　　　　　　　　　　　　112-RIBBON
　　　　　112　　　　　　　　　　　　　　　　　105

103　130　114　　122　　114　101　122　　104　114　130-BONDING MATERIAL
　　　　　　　　　　　　　BONDING　　　　　MATERIAL
　　　　　　　　　　　　　MATERIAL

INSULATED CONDUCTORS

　　　　　　　　　　　　　　　　　　100

101　　　　　　　　CONDUCTORS

101　126　102　114　103　101　　124　　130　110

130　　　　　　　　　　　　　　　　　130

128　　　　　　　　　　　　　　　　　128— INSULATION MATERIAL
INSULATION—126　　　　　　　　　　　114
MATERIAL　114　　　　　　　　　　　126
　　　　　105　　　　　　　　　　　119
　　　　　119　　　　　　　　　　　112—RIBBON
　　　　　112　　　　　　　　　　　105

130　115　122　　101　　115　122　　104　103　130—BONDING MATERIAL
　　　　　　　　　　　BONDING　　　　　MATERIAL
　　　　　　　　　　　MATERIAL

FIG. 5

0 274 173

FIG. 6A

FIG. 6B

FIG. 7A

FIG. 7B

FIG. 8

FIG. 7

FIG. 6

FIG. 9

FIG. 10

FIG. 11

FIG. 15

FIG. 16

FIG. 12

FIG. 13

FIG. 17

0 274 173

FIG. 18

FIG. 14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 142 694 (C.G.E.)<br><br>* Page 2, line 22 - page 5, line 2; figures 2-4 * | 1,2,4, 6,8,14 -19,21 -23,25 ,26,30 | H 01 B 7/30<br>H 01 B 7/08<br>H 02 K 3/14<br>H 02 K 3/04 |
| Y | | 3,5,7, 9-13, 20,24, 27-29, 31-37 | |
| Y | GB-A- 678 042 (AUTOMATIC)<br><br>* Page 2, line 46 - page 4, line 47; figures 1-5 * | 3,5,7, 9-13, 20,24, 27-29, 31-37 | |
| X | FR-A-2 146 677 (ALSTHOM)<br><br>* Page 1, line 25 - page 4, line 14; figures 2,4 * | 1,2,4- 6,14- 17,19- 21,25- 27 | TECHNICAL FIELDS SEARCHED (Int. Cl.4)<br><br>H 01 B<br>H 02 K |
| Y | --- -/- | 18 | |

The present search report has been drawn up for all claims

| Place of search | Date of completion of the search | Examiner |
|---|---|---|
| THE HAGUE | 09-09-1987 | TIO K.H. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| Y | US-A-2 004 612 (MASSINGHAM) <br> * Page 1, right-hand column, line 24 - page 2, left-hand column, line 7; figure 1 * | 18 | |
| X | US-A-4 075 420 (WALTON) <br><br> * Column 1, line 34 - column 4, line 16; figures 1,2 * | 1-13, 21-37 | |
| X | US-A-3 544 192 (GOLDSTEIN) <br><br> * Column 5, line 69 - column 6, line 35; column 7, line 14 - column 8, line 39; figures 1-12 * | 1-13, 21-37 | |

TECHNICAL FIELDS SEARCHED (Int. Cl.4)

The present search report has been drawn up for all claims

| Place of search | Date of completion of the search | Examiner |
|---|---|---|
| THE HAGUE | 09-09-1987 | TIO K.H. |